# EUROPEAN PATENT APPLICATION

(11) **EP 1 870 983 A2**
(43) Date of publication of application: **26.12.2007**
(21) Application number: 07110151.3
(22) Date of filing: 13.06.2007
(51) Int. Cl.: H02K 1/27, H02K 3/28, H02K 1/14, H02K 21/16

(54) **Single-phase permanent magnet electrical motor**

(30) Priority: 23.06.2006 IT MI20061208
(71) Applicant: Troisi, Diego, 20020 Barbaiana (IT)
(72) Inventor: Troisi, Diego, 20020 Barbaiana (IT)
(74) Representative: Mittler, Enrico

(57) **Abstract**

A single-phase AC-motor (1) comprises a rotor having surface-mounted magnets (13,16,313,316,413,416). Adjacent to each magnet (13,16,313,316,413,416) a small secondary magnet (14,17,314,317) of opposite polarity (or a less magnetised magnet or iron (414,417) is attached.
Purpose: Avoiding reverse rotation.
The stator (2,102) has concentrated windings around its teeth (6,7,106,107) or around its yoke sections (508,509). The stator may also comprise an annular coil (209,809) with poles (206,207,806,807) having an indentation (223,823) on one side.

## Description

The present invention relates to a single-phase permanent magnet electrical motor.

Electrical motors are devices which transform electrical energy into mechanical work. Specifically, rotary electrical motors express torques which force movements in rotary direction.

Rotary electrical motors consist of a fixed part, called stator, and a mobile part, called rotor. The stator generally consists of a hollow cylindrical metallic casing, within which the rotor is turnably inserted in coaxial position. Stator and rotor are separated by a thin air magnetic gap.

Different configurations according to which the rotor is external to the stator are also possible; such embodiments, fully compatible with the invention, are not mentioned hereinafter.

It is known that a permanent magnet is a body, generally formed by metal, oriented from its south pole to its north pole, capable of generating a magnetic field in the surrounding space and of interacting with external magnetic fields.

The ferromagnetic material is a magnetically neutral metal but it has the property of being magnetised, if invested by an external magnetic field, thus arranging its magnetic orientation as the external magnetic field. If the external magnetic field is null, the ferromagnetic material looses its magnetisation.

According to a comprehensive wording, permanent magnets and ferromagnetic material are part of the so-called "magnetic materials". The wording "magnetic element" will be used hereinafter to indicate either a permanent or ferromagnetic element made of magnetic material. A magnetic element is always "magnetisable" either because it is already magnetic (permanent magnet) or because it is adapted to be magnetised by an external magnetic field (ferromagnetic material).

If invested by an external magnetic field of sufficient intensity, a magnetic element is subjected to forces which tend to displace it and orient it according to the external magnetic field.

A metallic winding passed through by electrical current generates an induced magnetic field oriented in axial direction, with direction due to the direction of the winding (clockwise or anticlockwise) according to the law known as the "right-hand rule".

It must be noted that magnetic fields are vectorial quantities and are thus characterised by intensity and direction. The interactions of the various components may thus be composed so as to obtain the resulting magnetic field according to the known "parallelogram rule".

The higher the intensity of the magnetic field, the greater the capacity of orienting a magnetic element according to the direction of the magnetic field. Similarly, the more magnetised a magnetic element, the greater its capacity of orienting itself according to an external magnetic field of sufficient intensity. Permanent magnets are characterised by the known "residual magnetic induction", characteristic of a material and which may be looked up in tables. Given two magnets with the same residual magnetic induction, the larger magnet is more magnetic. Similarly, given two magnets of the same dimensions, the magnet with the higher residual magnetic induction is more magnetic.

Permanent magnet rotary electrical motors contemplate that the rotor is superficially provided with permanent magnets oriented according to radially alternating directions, and that the stator is provided with polar expansions formed by ferromagnetic material enveloped by induction windings, which are arranged so as to present their axis (and thus their magnetic orientation, if current passes through them) in radial direction, thus magnetising in its radial direction the polar expansions and inducing magnetic fields which interact with the permanent magnets of the rotor.

According to the direction of the current which passes through them and their winding direction, the stator windings induce magnetic fields radially oriented either towards the centre or outwards.

If a winding induces an outward magnetic field by effect of a current, the rotor tends to rotate so as to present a permanent magnet oriented as the induced magnetic field. If by effect of a subsequent current in opposite direction, the same winding induces an inward-oriented magnetic field and at the same time the winding of the next polar expansion induces an outward-oriented magnetic field, the rotor tends to displace itself so as to orient its permanent magnets according to the new magnetic field configuration induced by the windings.

The windings are often supplied by alternating current, so as to periodically change the direction of the current; in this manner, at each half-cycle, every polar expansion is affected by an induction opposite to that of the previous half-cycle, forcing the rotor to perform a rotary movement which takes every single permanent magnet to be angularly displaced towards the next polar expansion: the motor turns at a velocity proportional to the supply frequency of the windings.

Additionally, such windings are usually connected according to known two-phase or three-phase wiring schemes, by means of which it is possible to approximate the so-called ideal "rotary magnetic field", which consists in the fact that the magnetic field resulting from the interaction of the magnetic fields induced by the various windings rotates angularly, followed by the rotor at the same velocity.

Three-phase supply however is not available in all environments: e.g. it is never present in domestic environments. Additionally, it is known that permanent magnet three-phase motors require electronic instrumentation which is costly and difficult to implement.

Single-phase electrical motors employ windings connected in series, wound about the polar expansions alternatively clockwise and anticlockwise; in this manner, in every moment, the magnetic field induced by a winding on a polar expansion is always radially opposite to the magnetic field induced by both the previous and the next windings.

Single-phase electrical motors however present various disadvantages, which may be summarised as follows:
- the resulting magnetic field is pulsating instead of rotary: it is possible to consider such pulsing field as the vectorial sum of two fields of equal intensity rotating at the same velocity in opposite directions (such rotary magnetic fields are called direct field and reversed field); every single magnet is thus attracted in equal measure to follow both the direct field and the reversed field: consequently, the resulting force is null on every magnet;
- the rotor does not start spontaneously and requires a secondary winding or a starter motor which determine an increase in complexity and motor manufacturing costs;
- once started, the motor follows the direct field but is still disturbed by the effects of the reversed field.

It is the object of the present invention to make a permanent magnet rotary electrical motor supplied by single-phase alternating current which solves the aforementioned disadvantages.

In accordance with the invention, such object is reached by means of a rotary electrical motor comprising a rotor and a stator, said rotor comprising a plurality of permanent magnets superficially arranged according to alternating magnetic orientations, said stator comprising polar expansions magnetisable by effect of induction windings, characterised in that said rotor comprises on the surface a plurality of further magnetic elements, each of which said plurality of further magnetic elements being adjacent to a respective magnet of said plurality of permanent magnets, each of said plurality of further magnetic elements being magnetisable with essentially lower intensity and according to a magnetic orientation radially opposite to the closest of said plurality of permanent magnets, so as to determine the direction of rotation of said rotor.

The aforesaid magnets of said plurality of permanent magnets are permanent magnets present in traditional permanent magnet electrical motors; hereinafter, they are also called main permanent magnets.

The elements of said plurality of further magnetic elements are magnetic elements not present in the traditional permanent magnetic electrical machines; hereinafter, they are also called secondary magnetic elements because they are magnetised with an intensity essentially lower than the intensity presented by the main permanent magnets. The secondary magnetic elements consist of:
- permanent magnets with residual magnetic induction essentially lower than that of the main permanent magnets; each of the secondary magnetic elements is oriented in a direction radially opposite to the corresponding main magnet (either to the closest one or, in case of two equally distanced permanent magnets, either one of them);
- permanent magnets of dimensions essentially smaller that the dimensions presented by the main permanent magnets; in this case, the magnetic features are different due to the different dimensions presented by the main permanent magnets with respect to the secondary magnetic elements;
- ferromagnetic material, which is magnetised by effect of the external magnetic field (due to the induction windings).

The secondary magnetic elements, located in proximity of the main permanent magnet, tend to be oriented according to the direction of the external magnetic field, imposing rotations to the rotor according to a predetermined direction.

In the embodiments in which the secondary magnetic elements are permanent magnets, every main permanent magnet is interposed between two secondary magnetic elements, reciprocally oriented according to radially opposite directions: therefore, while a first secondary magnetic element is radially oriented as the main permanent magnet, the second secondary magnetic element is oriented in radially opposite direction. When the direction of the external magnetic field changes (by effect of the change of direction of the current of the induction winding), the second secondary magnetic element is driven to take the place of the main permanent magnet, determining the direction of rotation of the rotor.

In the embodiments in which the secondary magnetic elements are made of ferromagnetic material, every main permanent magnet is asymmetrically interposed between two secondary magnetic elements. When the external magnetic field changes (by effect of the change of direction of the current of the induction winding), the ferromagnetic element closest to the permanent magnet is magnetised and drives to take itself to the place of the permanent magnet, determining the direction of rotation of the rotor.

These and other features of the present invention will be further explained in the following detailed description of some embodiments shown by way ofnon-limitative examples in the attached drawings, in which:
figure 1 shows a cross section of an electrical motor according to a first embodiment of the invention, with an enlargment of one of its portions;
figure 2 shows a similar view to that of figure 1 in a subsequent moment of the operation of the motor;
figure 3 shows a similar view to that of figure 2 in a subsequent moment of the operation of the motor;
figure 4 shows a similar view to that of figure 3 in a subsequent moment of the operation of the motor;
figure 5 shows a similar view to that of figure 4 in a subsequent moment of the operation of the motor;
figure 6 shows a different embodiment according to the invention, in which the secondary magnetic elements consist of ferromagnetic material;
figure 7 shows a different embodiment according to the invention, in which there are spaces of non-magnetic material on the surface of the rotor and the secondary magnetic elements consist of permanent magnets with residual magnetic induction lower than that of the main permanent magnets;
figure 8 shows a useful contrivance for improving the performance of motors according to the invention;
figure 9 shows a perspective view of a further different embodiment according to the same invention;
figure 10 shows an embodiment of the stator windings made possible by the invention;
figure 11 shows a schematic representation of the plane development of the rotor surface for the embodiment with the further magnetic elements side by side to the permanent magnets, in respect of the rotation direction;
figure 12 a schematic representation in vertical section of rotor in figure 11 with a polar expansion over it;
figure 13 shows a schematic representation of the plane development of the rotor surface for the embodiment with the further magnetic elements side by side at both sides to the permanent magnets, in respect of the rotation direction, and in a raised position;
figure 14 shows a schematic representation in vertical section of rotor in figure 13 with a polar expansion added over it and further magnetic elements raised at the polar expansion level;
figure 15 shows an axonometric view of a further stator embodiment, with alternating passage of the winding between one polar expansion and the next;
figure 16 shows a schematic representation of an embodiment of the polar expansions with an indentation, referring to the stator embodiment in figure 9;
figure 17 shows a schematic representation of the partial overlapping between the polar expansion and the further magnetic element, for the embodiment with permanent magnets consecutive to further magnetic elements;
figure 18 shows a schematic representation of stator polar expansions with an indentation for the figure 15 stator embodiment;
figure 19 shows a schematic representation, for rotor in figure 11 and stator in figure 15, of the partial overlapping between polar expansion and further magnetic element.

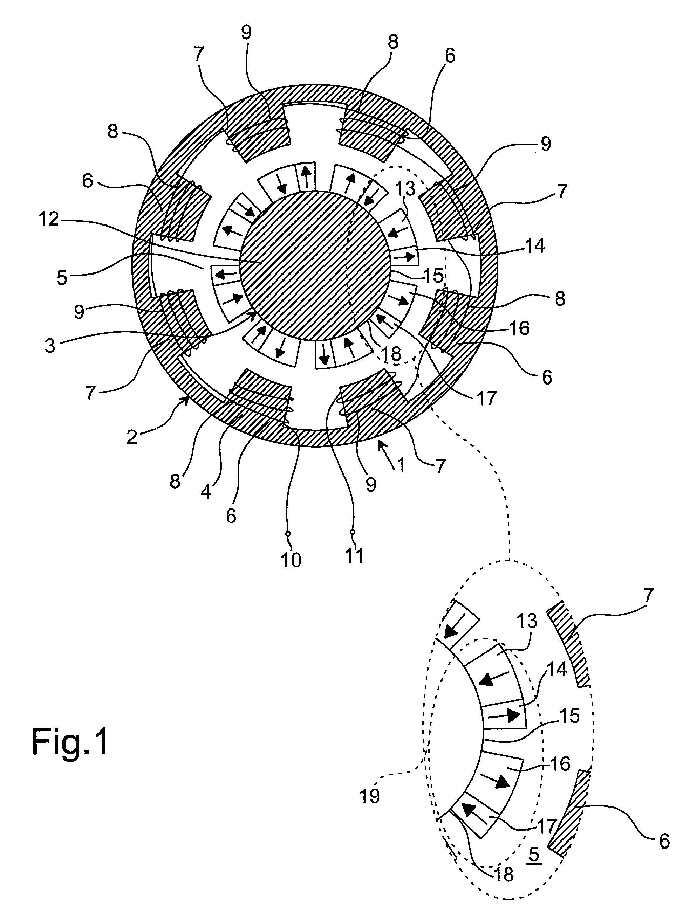

Figure 1 shows a motor 1 according to the invention. It consists of a fixed stator 2 and a mobile rotor 3, separated by an air magnetic gap 5; the dimensions of such magnetic gap 5 do not respect the real dimensions, but are preferred because they are clearer.

Stator 2 consists of a set of ferromagnetic material foils overlapped to form a hollow metal cylinder 4. Extending towards magnetic gap 5 and internally incorporated in cylinder 4, four polar expansion 6 are alternated to four equal polar expansions 7. Polar expansions 6 are enveloped, anticlockwise, by induction windings 8. Polar expansions 7 are enveloped, clockwise, by induction windings 9. In all the accompanying figures, the number of loops which form windings 8, 9 is merely indicative and does not respect the real number, which is enormously higher. Every induction winding 8 is connected in series, both upstream and downstream, to an induction winding 9, which is, in the same manner, connected to two induction windings 8; the entire series is connected, through terminals 10 and 11, to an external single-phase alternating voltage source, not shown in any figure.

The rotor 3 is formed by a cylindrical body 12 of ferromagnetic material, coaxial to stator 2 and to magnetic gap 5. In superficial position, there is arranged magnetic material, according to ordered sequence 19 developing clockwise, consisting of:
- a permanent magnet 13 with radial magnetic orientation facing towards the centre; given its large dimensions, such main permanent magnet 13 is highly magnetic;
- a secondary permanent magnet 14 with magnetic orientation radially opposite with respect to that of permanent magnet 13; given its small dimensions, such secondary permanent magnet 14 is weakly magnetic;
- an empty sector 15;
- a main permanent magnet 16, with the same magnetic orientation as secondary permanent magnet 14; given its large dimensions, such main permanent magnet 16 is strongly magnetic;
- a secondary permanent magnet 17, with the same magnetic orientation as the main permanent magnet 13; given its small dimensions, such secondary permanent magnet 17 is weakly magnetic;
- an empty sector 18.

Sectors 13, 14, 16, 17 are formed by the same magnetic material, but their different dimensions imply essentially different magnetic features.

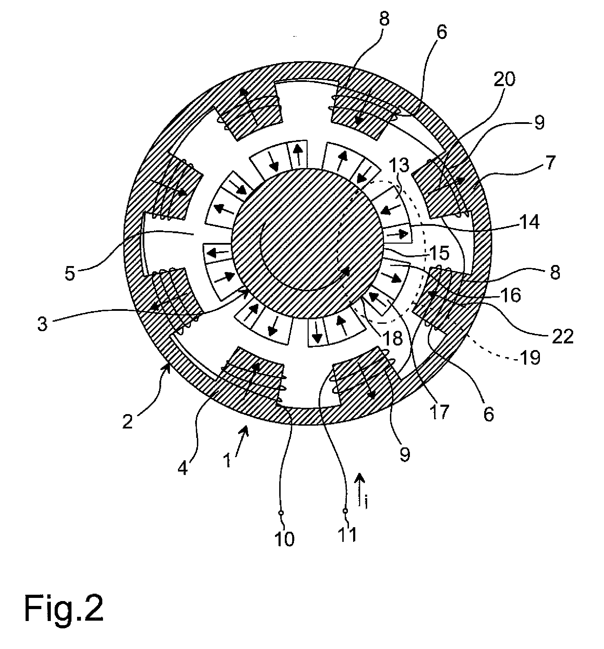

Initially, no current passes through induction windings 8, 9 and motor 1 is stably static in the position in figure 1. In a subsequent moment (shown in figure 2), a positive current i passes through windings 8, 9.

Windings 9 induce, in polar expansions 7, magnetic fields (indicated by vectors 20) oriented outwards, in direction opposite to the orientation of the opposite placed main permanent magnets 13, which are affected by forces which drive them in equal measure both clockwise and anticlockwise. Furthermore, windings 8 induce, in polar expansions 6, magnetic fields (indicated by vectors 22) oriented inwards, in direction radially opposite to the orientation of the opposite placed main permanent magnets 16, which are affected by forces which drive them, in equal measure, both clockwise and anticlockwise. For these reasons, in this moment, permanent magnets 13 and 16 neither contribute or hinder the rotation of the rotor in any manner.

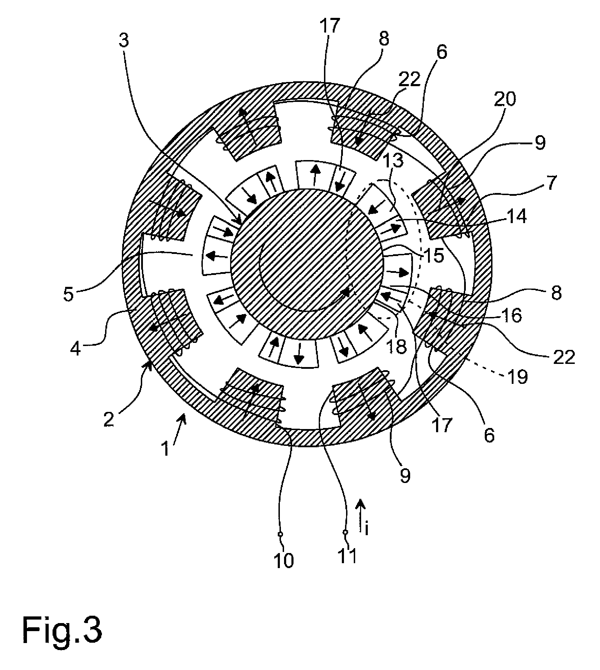

Permanent magnets 14 are instead driven to orient themselves as magnetic fields 20; similarly, permanent magnets 18 are driven to orient themselves as magnetic fields 22: the rotor turns anticlockwise arranging itself as shown in figure 3.

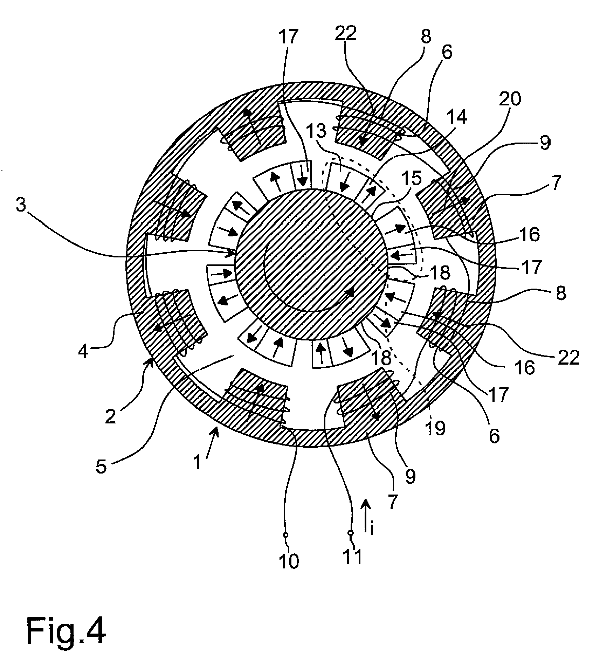

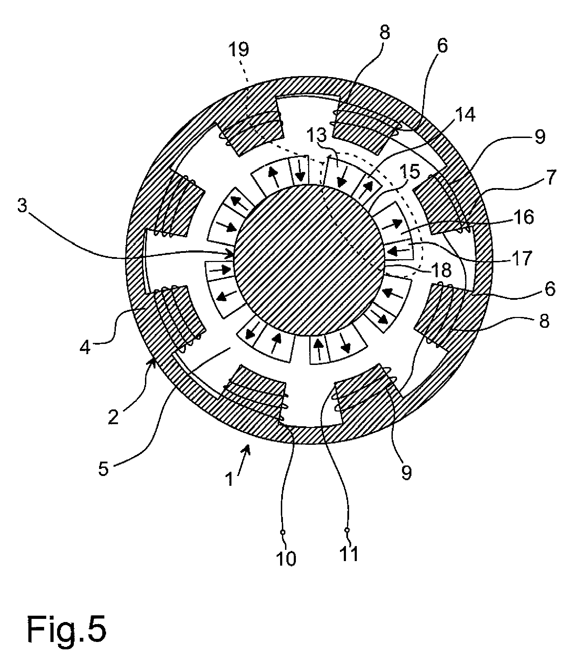

At this point, magnets 14 are arranged in position opposite to polar expansions 7 and are oriented according to the same direction as magnetic fields 20, but main permanent magnets 16, much more magnetised, are driven to take the place occupied by secondary permanent magnets 14; similarly, main permanent magnets 13 are driven to take the place of secondary permanent magnets 17 and to arrange themselves in a position opposite to polar expansions 6, aligning their magnetic orientation with magnetic fields 22. The result of these drives is such that rotor 3 is further rotated anticlockwise until it positions itself as shown in figure 4; the following instant (figure 5) shows the final position, when current i is null in windings 6 and 7.

Since, as shown in the example, current i is sinusoidal, the procedure which takes the motor from the position in figure 1 to the position in figure 5 is repeated for every half-cycle of current i. During the subsequent half cycle, a further rotary movement of the rotor towards the subsequent polar expansion occurs, in which every magnet is taken to the subsequent polar expansion.

It results that motor 1 rotates at a velocity proportional to the supply frequency.

It is simply necessary to reverse the abovementioned sequence 19 to make a motor capable of rotating clockwise. It is apparent that such motor 1 has the limitation of rotating only in one direction; it is possible to obviate to such drawback by overlapping two motors adapted to rotate in the opposite direction by means of appropriate connections.

It is possible, in other embodiments of the same invention, that the main permanent magnets and the secondary permanent magnets are obtained with dimensionally equal sectors formed by different magnetic material with essentially different residual magnetic inductions.

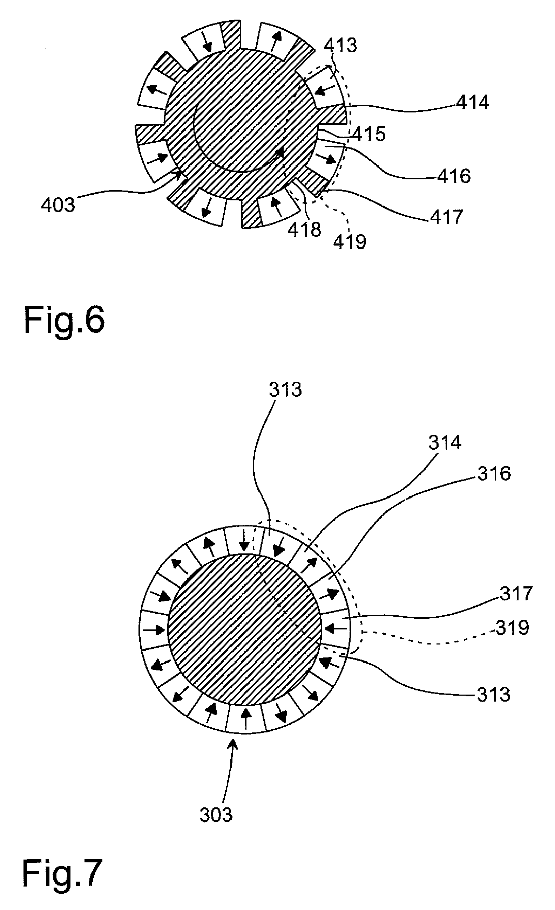

A variant of such example, shown in figure 6 (which shows only rotor 403; the stator is the same as stator 2 in the previous example), is a configuration which replaces secondary permanent magnets 14 and 17 with ferromagnetic material sectors, according to sequence 419:
- a first main permanent magnet 413 with radial magnetic orientation towards the centre;
- a first secondary magnetic element 414 made of ferromagnetic material;
- a first empty sector 415;
- a second main permanent magnet 416 with magnetic orientation opposite to the first permanent magnet;
- a second secondary magnetic element 417 made of ferromagnetic material;
- a second empty sector 418.

It is thus obtained a further embodiment of the same invention, with the differences:
- the ferromagnetic material (414, 417) is magnetically neutral in the initial moment, equivalent to that shown in figure 1 in the previous example;
- the first and the second of the ferromagnetic elements are magnetised, in a moment equivalent to that shown in figure 2, respectively according to the same orientation of permanent magnets 14 and 17, driving to orient itself in a position equivalent to that in figure 3;
- the process continues as shown in the previous example until moments equivalent to those shown in figures 4 and 5, when, due to the cancellation of current i, the secondary magnetic elements return magnetically neutral.

A further variant, shown in figure 7 (in which only rotor 303 is shown; the stator is the same as stator 2 of the first example shown) is also possible, in which secondary magnetic elements 314, 317 consist of permanent magnets but the empty sectors which in the previous examples were indicated as 15, 18, 415, 418 are left out; therefore, such embodiment consists in the following sequence:
- a first main permanent magnet 313 with radial magnetic orientation facing towards the centre; such permanent magnet 313 of high residual magnetic induction, is highly magnetic;
- a second permanent secondary magnet 314 with magnetic orientation radially opposite with respect to that of the first permanent magnet 313; such secondary permanent magnet 314, of low residual magnetic induction, is weakly magnetic;
- a second main permanent magnet 316, with the same magnetic orientation as the first secondary permanent magnet 314; such second main permanent magnet 316, of high residual magnetic induction, is highly magnetic;
- a second secondary permanent magnet 317, with the same magnetic orientation as the first main permanent magnet 313; such second secondary permanent magnet 317, of high residual magnetic induction, is weakly magnetic.

In such example, the main permanent magnets differ from the secondary permanent magnets in that they are formed by different magnetic materials and characterised by essentially different magnetic inductions. It would further be possible the variant in which they are formed by the same magnetic material, differing only for the different dimensions, as in the first example shown.

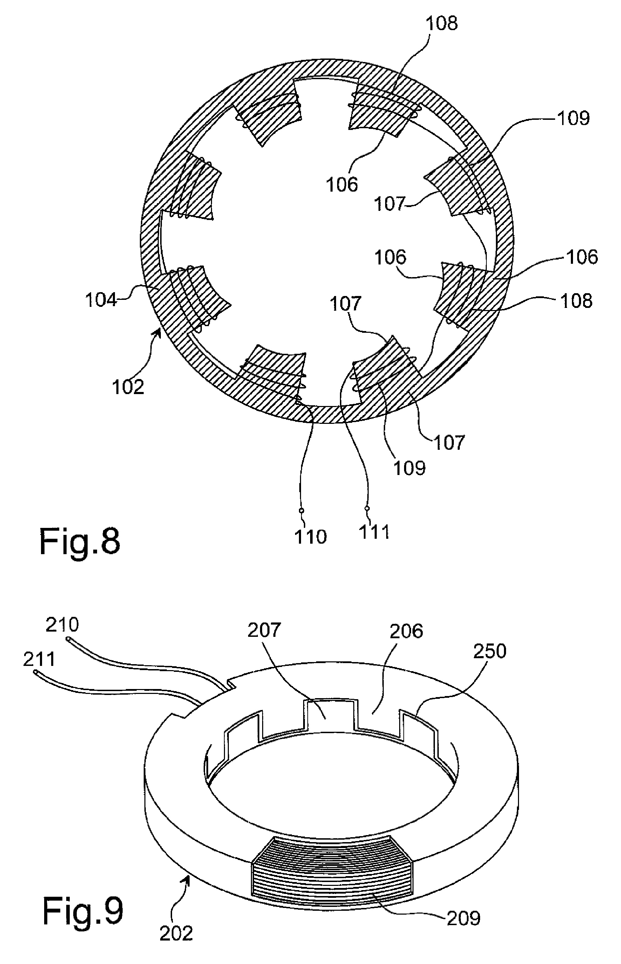

As shown in figure 8 (in which the rotor, which may be any of the ones presented in the previous examples, is not shown), polar expansions 106, 107 of stator 102 may be provided with shapings so as to make polar expansions 106, 107 asymmetric so as to reduce the width of the magnetic gap in the direction of rotation, thus favouring the alignment of the main permanent magnets and of the secondary magnetic elements with the corresponding stator polar expansions; indeed, the main permanent magnets and the secondary magnetic elements tend to arrange themselves where the magnetic gap has a minimum width.

It is also possible to make a motor, as shown in figure 9, whose rotor (which does not present substantial differences from the rotors in the previous examples) is not shown, with single winding 209, and to obtain, from stator 202, polar expansions 206, 207 from zigzag hollows 250 according to traditional schemes.

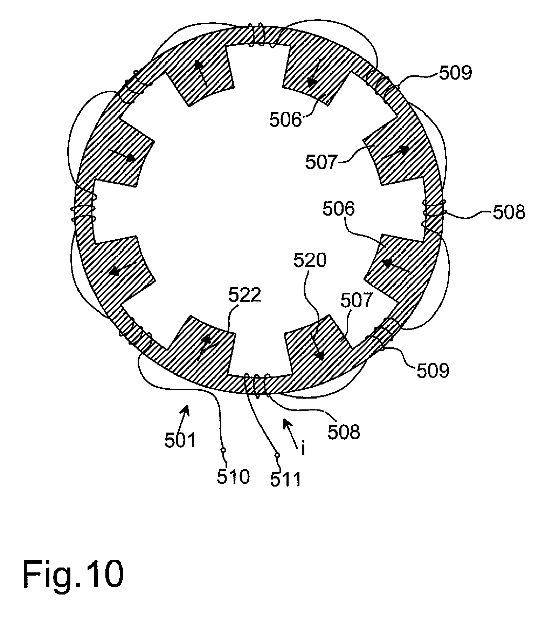

A further variant is also possible, which is shown in figure 10 (where the rotor, which may be equal to any one of the previous examples, is not shown). According to such variant, induction windings 508, 509 do not envelop polar expansions 506, 507, as in the known art but peripheral stator parts instead. If terminals 510, 511 are supplied with current i oriented as shown in figure 10, induction windings 508, 509 induce magnetic fields oriented according to vectors 520, 522, obtaining results similar to the traditional windings.

One such variant, certainly simpler with respect to the traditional ones, would not be possible with the motors of the known art; the invention allows to make electrical motors wound according to more cost-effective manners.

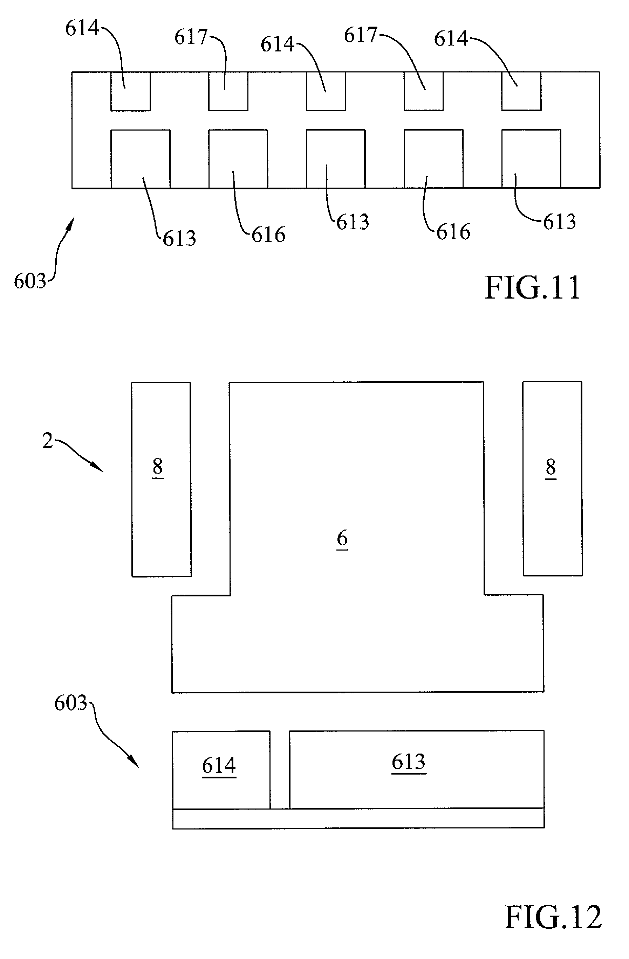

A further rotor embodiment is shown in figure 11 and 12, where further magnetic elements 614, 617 are positioned side by side, in respect of the direction of motion of rotor 603, to permanent magnets 613, 616 and at the same level. In figure 12 the matching between rotor 603 of figure 11 and polar expansion of stator 2 of figure 1 is shown. A variant of such an embodiment of rotor 603 shows further magnetic elements 614, 617 at both sides, in respect of the direction of movement of rotor, of the respective permanent magnet 613, 616.

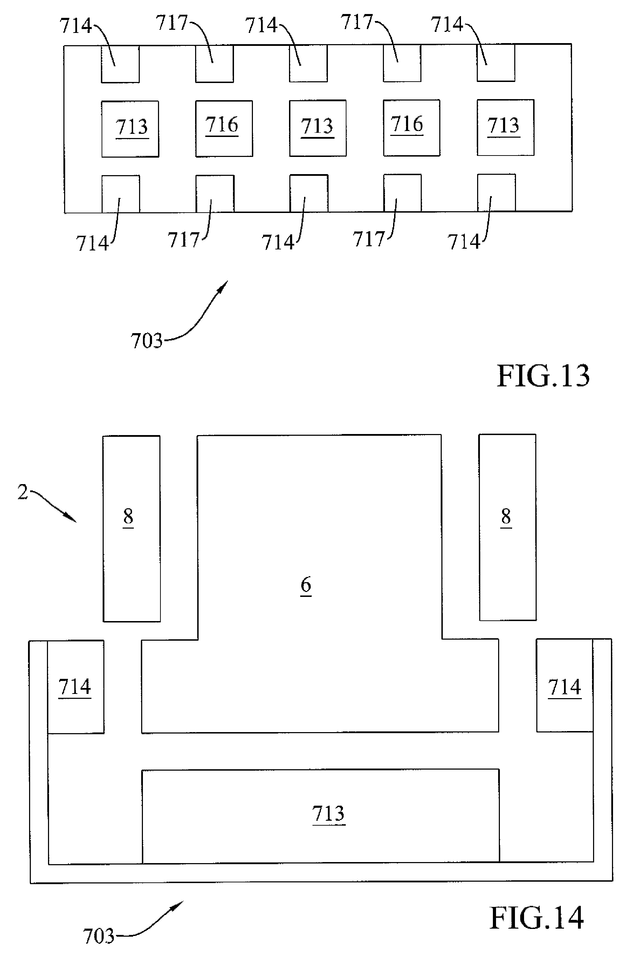

A further rotor embodiment is shown in figures 13 and 14 and shows further magnetic elements 714, 717 placed side by side, in respect of the direction of motion of rotor 703, to the respective permanent magnet 713, 716 and in a raised position, specifically at the same level of the above polar expansion. In figure 14 the matching between figure 13 rotor and polar expansion of rotor 2 in figure 1 is shown. A variant of such embodiment, not shown, sets only one further magnetic element in a raised position in respect of the permanent magnet.

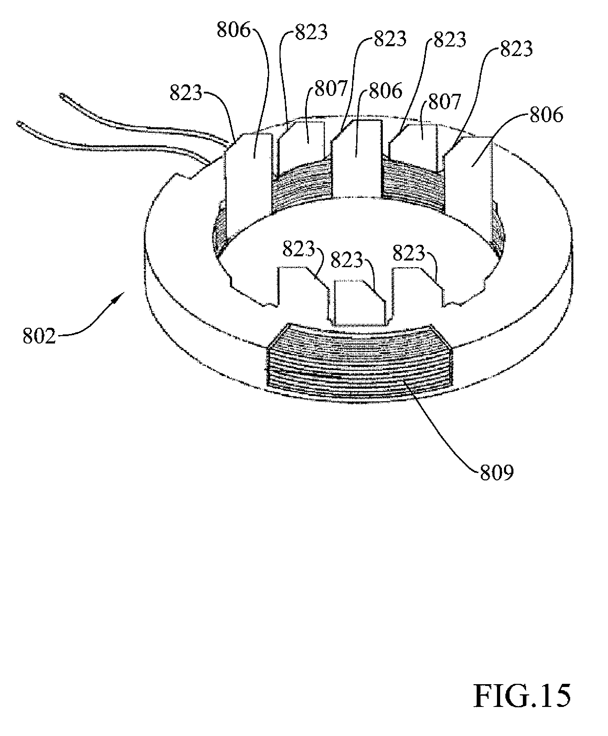

A further embodiment of stator 802 is shown in figure 15 and it is obtained with a through cavity adapted to accommodate an induction winding 809 concentrically wound about said stator 802 and polar expansions 806, 807 directed as the stator axis and with their free extremities bound to the same direction, in association with an alternating passage of winding 809 between a polar expansion and the other. This stator embodiment can advantageously be matched with rotor 603 embodiment shown in figure 11.

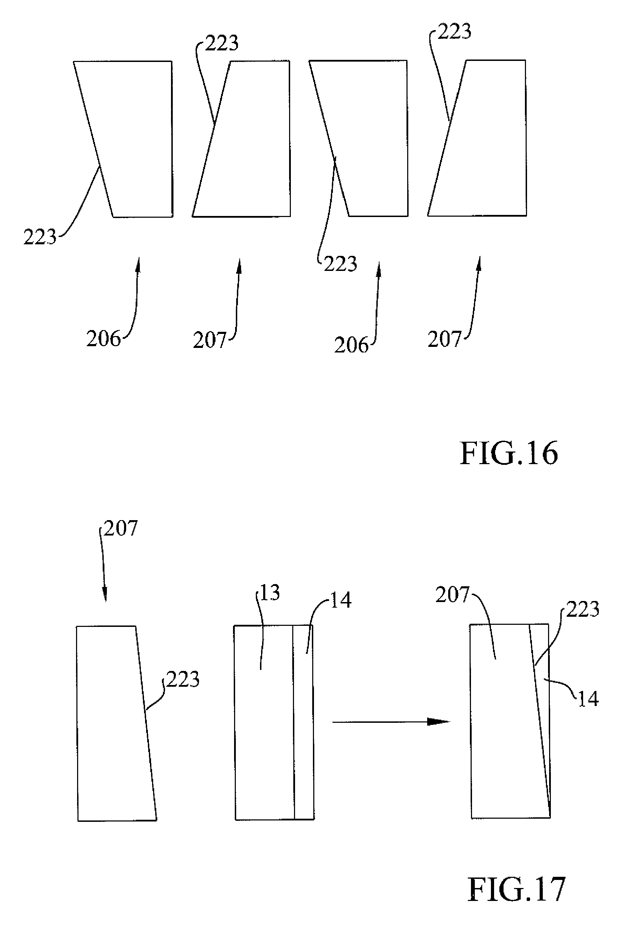

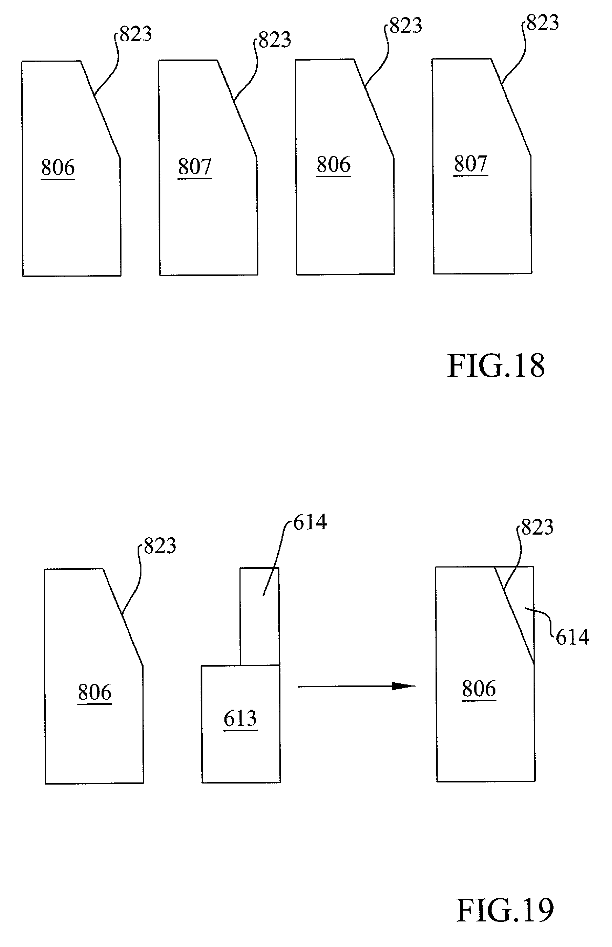

As can already be noted in figure 15, and in deeper detail in figures 16 to 19, it is a further possibility to configure stator polar expansions, here specifically stator embodiments in figures 9 and 15 are referred to by way of non limitative example, practising an indentation 223, 823 on the polar expansion (here in the shape of a lamination) in correspondence with the further magnetic element 14, 614 on the rotor in such a way to avoid the situation of magnetic balance obtained by a perfect overlapping of the further magnetic element 14, 614 by means of polar expansions 207, 806 of stator 202 and thus favouring the attraction movement between further magnetic elements 14, 614 and respective polar expansions 207, 806.

It is to be noted that an analogous indentation (not shown for the sake of brevity) of different shape but equal functionality can be made even to polar expansions relative to other stator embodiments.

It is finally known that it is not necessary to supply a motor according to the invention with sinusoidal alternating voltage; it is further possible to use alternating pulse voltage.

In conclusion, the further advantages of a motor according to the invention are listed.

The presence of a single phase which magnetises all stator magnetic expansions at the same time allows to exploit the magnetic cycle entirely, with an advantage in terms of torque by volume unit, with respect to other motors. Such a motor allows to save on the amount of magnetic material used, generated torque being equal.

A motor according to the invention does not requires the burdensome electronic circuits which normally supply the traditional permanent magnetic motors. As an exception, if a variation of velocity is required, this may be obtained by means of simple electronic circuits which generate a variable frequency pulse alternating voltage.

Furthermore, when the motor is not supplied, the magnetic field induced by the highly magnetised sectors is of sufficient intensity to keep the latter aligned with the corresponding stator polar expansions, locking and keeping the rotor in position. In such a way, there is obtained an energy saving with respect to the common permanent magnet motors which must be fed, even to generate an adequate locking torque.

Such a motor, since it may present a high number of polar expansions, is adapted to express high forces by volume unit, making it possible to directly couple the motor to mechanical loads without the need for reduction mechanisms.

Finally, a motor according to the invention does not require sophisticated motion control systems, therefore no position or velocity sensors are required.

The motors according to the invention may thus be applied in all cases in which single-phase rotating motors are needed, specifically to replace traditional, single-phase asynchronous motors.

Specifically, interesting applications are certainly household appliances, such as washing machines, vacuum cleaners, fans or hair dryers.

In the industry field, interesting applications are actuators, cost-effective positioners, pumps and ventilation motors.

## Claims

1. A rotary electrical motor (1) comprising a rotor (3) and a stator (2), said rotor comprising a plurality of permanent magnets (13, 16) superficially arranged according to alternating magnetic orientations, said stator (2) comprising polar expansions (6, 7) magnetisable by effect of induction windings (8, 9), **characterised in that** said rotor (3) comprises on the surface a plurality of further magnetic elements (14, 17), each element of said plurality of further magnetic elements (14, 17) being adjacent to a respective magnet of said plurality of permanent magnets (13, 16), each element of said plurality of further magnetic elements (14, 17) being magnetisable with essentially lower intensity and according to a magnetic orientation radially opposite to the closest of said plurality of permanent magnets (13, 16), so as to determine the direction of rotation of said rotor (3).

2. An electrical motor according to claim 1, **characterised in that** at least one element of said further magnetic elements (314, 317) is a permanent magnet with residual magnetic induction essentially lower than the residual magnetic induction of each magnet of said plurality of permanent magnets (313, 316).

3. An electrical motor according to one of the claims 1 or 2, **characterised in that** at least one element of said plurality of further magnetic elements (14, 17) is a permanent magnet of dimensions essentially smaller than the dimensions of each magnet of said plurality of permanent magnets (13, 16), so as to present a magnetising intensity essentially lower than the intensity presented by each magnet of said plurality of permanent magnets (13, 16).

4. An electrical motor according to any of the preceding claims, **characterised in that** at least one element of said plurality of further magnetic elements (414, 417) is made of ferromagnetic material.

5. An electrical motor according to any of the preceding claims, **characterised in that** at least one magnet of said plurality of permanent magnets (13, 16) is spaced apart by at least one element of said plurality of further secondary magnetic elements (14, 17) for a non-magnetic material sector (15, 18).

6. An electrical motor according to claim 5, **characterised in that** said non-magnetic material (15, 18) is air.

7. An electrical motor according to any of the preceding claims, **characterised in that** said plurality of permanent magnets (13, 16) and said plurality of further magnetic elements (14, 17) are superficially arranged on said rotor (3) according to a sequence (19) ordered and periodical comprising, in order, a first permanent magnet (13) oriented in radial direction, followed by a second permanent magnet (14) oriented in direction radially opposite to said first permanent magnet (13), followed by non-magnetic material (15), followed by a third permanent magnet (16) oriented as said second permanent magnet (14), followed by a fourth permanent magnet (17) oriented as said first permanent magnet (13) followed by non-magnetic material (18), said first and third permanent magnet (13, 16) belonging to said plurality of permanent magnets, said second and fourth permanent magnet (14, 17) belonging to said plurality of further magnetic elements.

8. An electrical motor according to any of the claims 4-6, **characterised in that** said plurality of permanent magnets (413, 416) and said plurality of further magnetic elements (414, 417) are superficially arranged on said rotor (403) according to an ordered and periodical sequence (419) comprising in order a first permanent magnet (413) oriented in radial direction, followed by ferromagnetic material (414), followed by non-magnetic material (415), followed by a second permanent magnet (416) oriented according to a second direction radially opposite to said first permanent magnet (413), followed by further ferromagnetic material (417), followed by non-magnetic material (418), said first and second permanent magnet (413, 416) belonging to said plurality of permanent magnets and said ferromagnetic material (414, 417) belonging to said plurality of further magnetic elements.

9. An electrical motor according to any of the claims 1-6, **characterised in that** said plurality of permanent magnets (313, 316) and said plurality of further magnetic elements (314, 317) are superficially arranged on said rotor (303) according to an ordered and periodical sequence (319) comprising, in order, a first permanent magnet (313) oriented in radial direction, followed by a second permanent magnet (314) oriented in direction radially opposite to said first permanent magnet (313), followed by a third permanent magnet (316) oriented as said second permanent magnet (314), followed by a fourth permanent magnet (317) oriented as said first permanent magnet (313), said first and third permanent magnet (313, 316) belonging to said plurality of permanent magnets, said second and fourth permanent magnet (314, 317) belonging to said plurality of further magnetic elements.

10. An electrical motor according to any of the claims 7-9, **characterised in that** said sequence (19, 319, 419) is developed clockwise.

11. An electrical motor according to any of the claims 7-9, **characterised in that** said sequence (19, 319, 419) is developed anticlockwise.

12. An electric motor according to any of the claims 1-6, **characterized in that** rotor (603) comprises at least one further magnetic element (614, 617) side by side to, in respect to the direction of movement of rotor (603), each permanent magnet (613, 616).

13. An electric motor according to claim 13, **characterized in that** the at least one further magnetic element (714, 717) placed side by side to, in respect of the direction of motion of rotor (703), each permanent magnet (713, 716), is placed in a raised position in respect of the permanent magnet (713, 716).

14. An electrical motor according to any of the preceding claims, **characterised in that** said polar expansions (6, 7) are enveloped by induction windings (8, 9) so as to be magnetised according to alternatively opposite orientations (21, 22), said induction windings (8, 9) being connected in series.

15. An electrical motor according to any of the claims 1-13, **characterised in that** said induction windings (508, 509) envelop portions of zones adjacent to said polar expansions (506, 507), so as to magnetise said polar expansions (506, 507) according to alternatively opposite orientations, said induction windings (508, 509) being connected in series.

16. An electrical motor according to any of the preceding claims, **characterised in that** at least one of said polar expansions (106, 107) extend asymmetrically to decrease the width of the gap towards the direction of rotation of the rotor.

17. An electrical motor according to any of the preceding claims, **characterised in that** it comprises means adapted to allow the rotation in reversed direction with respect to the rotation of said electrical motor.

18. An electrical motor according to any of the preceding claims, **characterised in that** said rotor (3) is coaxially and rotationally inserted in said stator (2).

19. An electrical motor according to any of the claims 1-17, **characterised in that** said stator is coaxially and rotationally inserted in said rotor.

20. A motor according to any of the claims 1-18, **characterised in that** said stator (202) presents a through cavity adapted to accommodate an induction winding (209) concentrically wound about said stator (202), said polar expansions (206, 207) being obtained by a zigzag surface cavity (250) arranged on the internal face of said stator (202).

21. A motor according to claim 19, **characterised in that** said stator presents a through cavity adapted to accommodate an induction winding concentrically wound about said stator, said polar expansions being obtained by a zigzag surface cavity arranged on the external face of said stator.

22. An electric motor according to any of claims 1-18, **characterized in that** said rotor (802) comprises a through cavity adapted to accommodate an induction winding (809) concentrically wound about said stator (802) and polar expansions (806,807) directed as the stator axis and with their free extremities bound to the same direction, said winding (809) developing with an alternating passage between a polar expansion (806, 807) and the other.

23. An electric motor according to any of the preceding claims, **characterized in that** polar expansions (6, 7; 106,107; 206,207; 506,507; 806, 807) show at least one indentation (223; 823) in such a way that when overlapped to permanent magnets (13, 16; 313, 316; 413, 416; 613, 616; 713, 716), they leave uncovered a portion of at the least one further magnetic element (14, 17; 314, 317; 414, 417; 614, 617; 714, 717) adjacent to the respective permanent magnet (13, 16; 313, 316; 413, 416; 613, 616; 713, 716) thus favouring the attraction movement between the further magnetic elements (14, 17; 314, 317; 414, 417; 614, 617; 714, 717) and the respective polar expansions (6, 7; 106,107; 206,207; 506,507; 806, 807).
